# EUROPEAN PATENT SPECIFICATION

(11) **EP 2 969 343 B1**
(45) Date of publication and mention of the grant of the patent: **09.05.2018**
(21) Application number: 14768683.6
(22) Date of filing: 14.03.2014
(51) Int. Cl.: B23D 61/02, B27B 5/29

(54) **CIRCULAR LAMINATED SAW BLADE CORES**
KREISFÖRMIGE LAMINIERTE SÄGEBLATTKERNE
LAME DE SCIE CIRCULAIRE STRATIFIÉS

(30) Priority: 15.03.2013 US 201361801907 P
(43) Date of publication of application: 20.01.2016
(73) Proprietor: Western Saw Manufacturers, Inc., Oxnard, CA 93030-8998 (US)
(72) Inventor: BARATTA, Anthony, Oak Park, CA 91377 (US)
(74) Representative: Viering, Jentschura & Partner mbB Patent- und Rechtsanwälte
(86) International application number: PCT/US2014/026906
(87) International publication number: WO 2014/152063

(56) References cited:
- EP-A1- 0 703 034
- GB-A- 2 006 105
- JP-A- H06 277 943
- JP-A- 2009 101 488
- JP-A- 2009 233 830
- US-A- 3 854 364
- US-A- 4 982 720
- US-A- 4 982 720
- US-A- 5 014 678
- US-A- 5 040 341
- US-A1- 2011 017 043

## Description

### BACKGROUND

### Field

The invention relates to tools and other dynamic products and associated components, methods for making and using those products, and tools, including cutting elements, and saw blades. More specifically the invention relates to a circular laminated saw blade core according to the preamble of claims 1 and 2 and a method of forming such a blade core.

Such a circular laminated saw blade core is known from
the United Kingdom patent application publication GB 2 006 105 A and the United States patent US 3 854 364 A.

Specifically, these saw blades
have relatively thin covering plates on the outside of a relatively thick saw blade providing structural support.

It is an object of the invention to improve the prior art saw blades, for instance to accomplish lighter-weight components with reduced blade core tensioning.

This and other objects are achieved by a circular laminated saw blade core according to claims 1 and 2
and a corresponding method of forming a laminated blade core according to claim 10. Advantageous further embodiments are claimed in the dependent claims 3 - 9 and 11 - 15.

### SUMMARY

Apparatus and methods of making the apparatus of cores for circular saw blades are disclosed. In one example, a disc portion for a circular saw blade core is formed having a bossment, wherein the bossment has a uniform thickness or depth relative to at least one surface portion of the disc. In another example, a disc portion for a circular saw blade core includes a perimeter portion having a hem, and the hem can be folded to one side or to the other side of the disc.

In a further example of a laminar element for use in a circular blade core, the laminar element includes one or more bossments. In the present disclosure, the bossment may be configured for structural purposes, or both structural purposes and as a fluid conduit. The bossment forms part of a closed cavity with another laminar element of the blade core. Two or more laminar elements are combined with adhesive to form the blade core. A bossment forming part of the blade core with another component of the blade core and fixed with adhesive helps to define a closed cavity, and the bossment contributes to increased strength of the blade core. When used as a fluid conduit, in addition to providing added strength, the bossment forms part of a cavity and the cavity can form a flow channel or a reservoir for a flow channel for allowing fluid to pass from an inlet to an outlet. In one example, an inlet and/or an outlet may be provided by an opening through a wall forming part of the bossment. In another example, an inlet and/or an outlet may be provided at an interface between the laminar element and an adjacent structure, for example another laminar element. An example of an inlet and/or an outlet at an interface between laminar elements includes an inlet in an interior area of the blade core, for example in an area of a blade flange, which may supply cooling fluid, for example. Another example of an inlet and/or an outlet at an interface between laminar elements includes an outlet at a perimeter of the blade core, for example an outlet to a gullet at a perimeter of the blade core. The laminar element is combined with a second laminar element. The laminar element and the second laminar element are secured or fixed together with adhesive. In a number of examples, the second laminar element will be a mirror image of the first laminar element. In other examples, the second laminar element may be a simple planar disk, a disc with bossment, a disc with or without hem portions, and/or a disc coextensive with the first laminar element or having different dimensions, profile or geometry. Also in a number of examples, first and second laminar elements will be secured together using adhesive, but examples can also be used where a combination of adhesive and other securing means is used. The adhesive can be applied to one or more of the structures forming a lamination, and for a given laminar element, adhesive can be applied to all or part of the surface of the laminar element facing the adjacent laminar element. In one example, adhesive is applied to all surfaces that would otherwise contact an adjacent laminar element or other structure forming the laminate if the adhesive were absent. In the examples illustrated with the present specification, the structure representing adhesive is not shown in the drawings for simplicity and clarity of illustration, it being understood that adhesive could be applied to all surfaces that would otherwise contact an adjacent laminar element if the adhesive were absent, or less than all such surfaces at the discretion of the designer. It is also understood that, for ease of application, adhesive could be applied to surfaces that would not come into contact, for example bossment surfaces. In another example, for a circular cutting blade core, adhesive is applied to a laminar element up to an area adjacent gullets formed in part by the laminar element. In this example, the perimeter portion in the area of the gullets may be secured by other means, such as a different adhesive, laser welding, brazing, rivets or other means. Other structures may be used with a laminar element to form a circular cutting blade.

In another example of a laminar element for use as part of a core of a circular cutting blade, a bossment formed in a portion of the laminar element may take a number of configurations. The bossment may have a constant geometry as a function of radius, or the bossment geometry may change as a function of radius. In one example, the bossment geometry may be substantially straight, for example on a radius of the core, or off-radius, for example forming part of a chord in the laminar element. In another example, the bossment geometry may be more complex, and may include random or repeated shapes, for example circles, triangles, rectangles and more complex uniform or non-uniform shapes. In another example, the bossment may follow one or more curves, including curves extending between a flange area and a perimeter area of the laminar element to be used to form part of the core. One possible curvature is selected according to core diameter and speed to reduce or minimize internal fluid pressure where fluid is passed through arcuate-extending channels. In one example, the laminar element may have an odd number of bossment surfaces to minimize the possibility of a diameter of symmetry in the surface of the laminar element. The laminar elements are combined to form a circular cutting blade core and secured together with adhesive. One or more structural supports may be included in the laminate, for example inserts, plates, rings or ring segments. In one example, an insert is secured between two laminar elements in an area where a blade flange is used to secure the blade on a drive element, for example a saw. The insert may be a disc, a spur element, or other insert having a geometry or configuration suitable for the assembly. In another example, a perimeter ring or ring segment or series of ring segments may be included in a gap or other spacing at a perimeter of the core. Perimeter inserts may help in providing structural support at the perimeter, additional material for attaching cutting segments, or foundation for supporting other components.

A laminar element having a bossment structure can be formed through a pair of embossing tools. A sheet for the laminar element may be prepared in accordance with conventional practices, including but not limited to rolling, grinding, cutting and/or cleaning. The laminar element is then shaped as desired by the embossing tools to produce the desired bossment configuration. If a hem is to be applied to the perimeter, one or more tabs or perimeter segments are shaped to form the desired hem. Any hem portion can be formed to one side of the laminar element or to the other, partly as a function of the desired configuration of the final lamination.

The embossed laminar element is then cleaned and adhesive applied to the desired surface or surfaces. Any inserts, for example a compression disk and/or a perimeter ring, is then placed on the portions of the laminar element to be contacted by those elements. Additionally adhesive is applied to the insert, and then a second laminar element applied. The assembly is then cured or otherwise processed to the desired configuration. If a hem is included, the assembly may be OD ground so the assembly has the desired OD and curvature so that segments or other cutting elements can be applied in a conventional manner. If a hem is not included and a ring or ring segments inserted, cutting segments or other cutting elements can be applied.

If a laminated core assembly is to include a laminar element that is a mirror image of the other laminar element, suitable embossing tools that would produce a mirror image laminar element to the first laminar element are used. The second laminar element is produced with the second embossing tools in the same manner as was described with respect to the first embossing tools. The second laminar element would be typically treated and processed in the same manner. In the assembly of laminar elements to form a circular cutting blade core, bossments are used to improve strength and lifetime of the tool. Where a particular laminar element has a first surface area of bossment, and a second surface area without bossment, it may be desirable to maximize the first surface area. Maximizing the first surface area when bossment areas on adjacent laminar elements are adhered together improve the strength and reliability of the assembly. Additionally, for a tool such as is formed from a laminar assembly for a circular cutting blade, it may be desirable to have the maximized first surface areas of bossment portions secured together by adhesive. In such a configuration, such bossment portion are closer to or at the center of the laminar assembly, and farther from the outermost boundary of the envelope defined by the complete cutting blade during operation. In examples of concrete cutting blades, such bossment portions would be farther from the adjacent cut surfaces than the non-bossment portions. This can help to reduce the amount of heat generated in the cutting blade, and improve blade life. Therefore, blade core designs that optimize or increase the bossment surface area, and wherein such bossment areas adjacent each other are secured together, may be more desirable than either blade core designs having increased non-bossment areas or blade core designs, or blade core designs where non-bossment areas are interior and bossment areas are closer to the envelope defined by the maximum width of the cutting blade.

In a further assembly of laminar elements to form a circular cutting blade core, the assembly may be formed to optimize the balance of elements forming the assembly so that the blade core line of action or inertial plane is down the center of the core. This can be done for example by using mirror image laminar elements, and/or using symmetric elements to form the laminate.

These and other examples are set forth more fully below in conjunction with drawings, a brief description of which follows.

### BRIEF DESCRIPTION OF THE DRAWINGS

FIG. 1 is an upper isometric of a left side of a laminate forming a core for a circular cutting blade.
FIG. 2 is a plan view of the core of FIG. 1.
FIG. 3 is a side elevation view of the core of FIG. 1.
FIG. 4 is a partial transverse section of the core taken along line 4-4 of FIG. 2.
FIG. 5 is a partial transverse cross-section of the core taken along line 5-5 of FIG. 2.
FIG. 6 is a partial transverse cross-section of the core taken along line 6-6 of FIG. 2.
FIGS. 7-12 are side elevation and schematic views of perimeter configurations for a blade core laminate.
FIG. 13 is a plan view of a core insert in the form of a compression disk for use with the core of FIG. 1.
FIG. 14 is an isometric view of a perimeter ring for use as an insert in the core of FIG. 1.
FIG. 15 is a schematic and isometric view of a section of a core showing a perimeter configuration and a bossment configuration.
FIG. 16 is an exploded and isometric view of embossment tools and an embossed laminar element.
FIG. 17 is a partial transverse section of an embossment tool of FIG. 16.
FIG. 18 is a top plan view of a laminar element for a core configured to have a hem, prior to forming the hem.
FIG. 19 is a detailed view of a portion of the perimeter of the laminar element of FIG. 18.
FIG. 20 is a partial transverse cross-section taken at line 20-20 of FIG. 19.

### DETAILED DESCRIPTION

This specification taken in conjunction with the drawings sets forth examples of apparatus and methods according to the present inventions. The examples provide the best modes contemplated for carrying out the inventions, although it should be understood that various modifications can be accomplished within the parameters of the present inventions.

Examples of tools and of methods of making and using the tools are described. Depending on what feature or features are incorporated in a given structure or a given method, benefits can be achieved in the structure or the method. For example, tools using fluid for cooling may achieve better cooling and longer lifetime. They may also demonstrate better fluid consumption characteristics, for example greater efficiency. Cutting tools may have improved noise and/or vibration characteristics and may be operated at higher speeds. Additionally, some cutting tool configurations may also benefit from lighter-weight components, lower-cost and reduced wear.

In tools similar to circular saw blade configurations, blade core tensioning may be reduced or eliminated, and the blade core may be made lighter.

These and other benefits will become more apparent with consideration of the description of the examples herein. However, it should be understood that not all of the benefits or features discussed with respect to a particular example must be incorporated into a tool, component or method in order to achieve one or more benefits contemplated by these examples. Additionally, it should be understood that features of the examples can be incorporated into a tool, component or method to achieve some measure of a given benefit even though the benefit may not be optimal compared to other possible configurations. For example, one or more benefits may not be optimized for a given configuration in order to achieve cost reductions, efficiencies or for other reasons known to the person settling on a particular product configuration or method.

Examples of a number of tool configurations and of methods of making and using the tools are described herein, and some have particular benefits in being used together. However, even though these apparatus and methods are considered together at this point, there is no requirement that they be combined, used together, or that one component or method be used with any other component or method, or combination. Additionally, it will be understood that a given component or method could be combined with other structures or methods not expressly discussed herein while still achieving desirable results.

Saw blades are used as examples of a tool that can incorporate one or more of the features and derive some of the benefits described herein, and in particular concrete saw blades. Concrete saw blades often operate at elevated speeds, are cooled with water, and are used for a number of applications.

It should be understood that terminology used for orientation, such as front, rear, side, left and right, upper and lower, and the like, are used herein merely for ease of understanding and reference, and are not used as exclusive terms for the structures being described and illustrated.

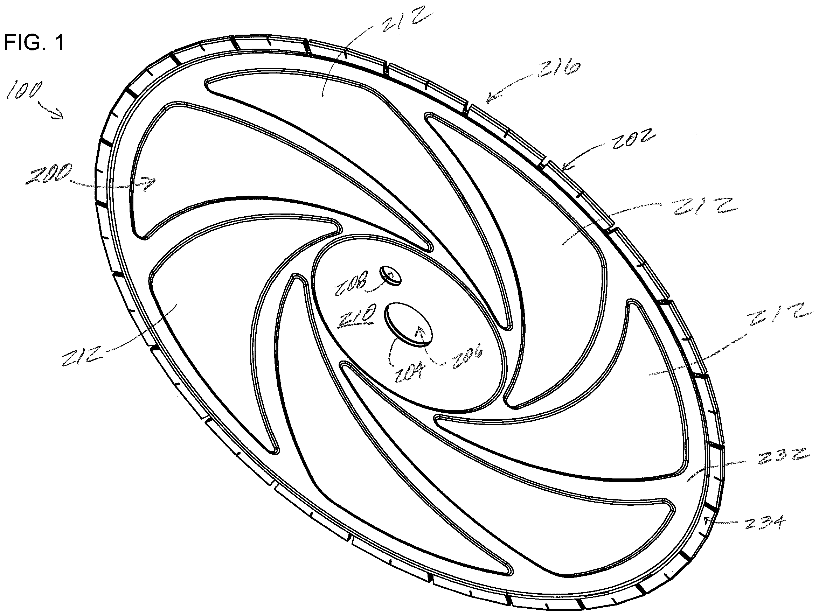

An exemplary laminated core 100 (FIGS. 1-6) for a circular saw blade is formed from two or more laminar elements. In one example illustrated in the Figures, two laminar elements, an adhesive layer (not shown), and a compression plate are combined to form a laminar core. While it is possible to omit a compression plate, it will be assumed for the present examples that a compression plate is included in the laminar structure. Additionally, while a number of securement configurations can be used to form the laminar structure, an adhesive layer is presently preferred. However, for simplicity and clarity of illustration, an adhesive layer is not shown, but it should be understood that at least one laminar element will have an adhesive layer placed or coated on the surface to be secured to another laminar structure during assembly.

In the present example, the laminated core 100 is formed from a first laminar element or disk 200 and a second laminar element or disk 202. In the present examples, the second laminar element 202 is identical to the first laminar element 200 except that the second laminar element 202 is a mirror image of the first laminar element 200. While it is understood that each of the laminar elements in the assembly, in the present case 200 and 202, need not be identical and need not be mirror images of each other, being mirror images of each other provides a structural balance and symmetry, and improves the likelihood that the line of action or line of symmetry of the laminate is along the center of the adhesive between the first and second laminar elements. The second laminar element will not be described further since it is a mirror image of the first laminar element, except to note that the second laminar element is produced by embossment tools different than those for the first laminar element and an opposite hem formed in order to produce the mirror image.

The first laminar element 200 is formed from a conventional flat sheet of metal typically used in blade cores, known to those skilled in the art. A wall 204 for an arbor hole 206 is formed in the center of the first laminar element for receiving a drive arbor of a saw. The saw can be any number of devices including handsaw, a flat saw, tablesaw, mill saw, as well as many other saw configurations. A hole 208 is also formed for keying the blade on the arbor. The first laminar element or disk 200 further includes a relatively flat circular flange surface 210, against which the flange of the saw bears to help in holding and driving the blade during normal operation.

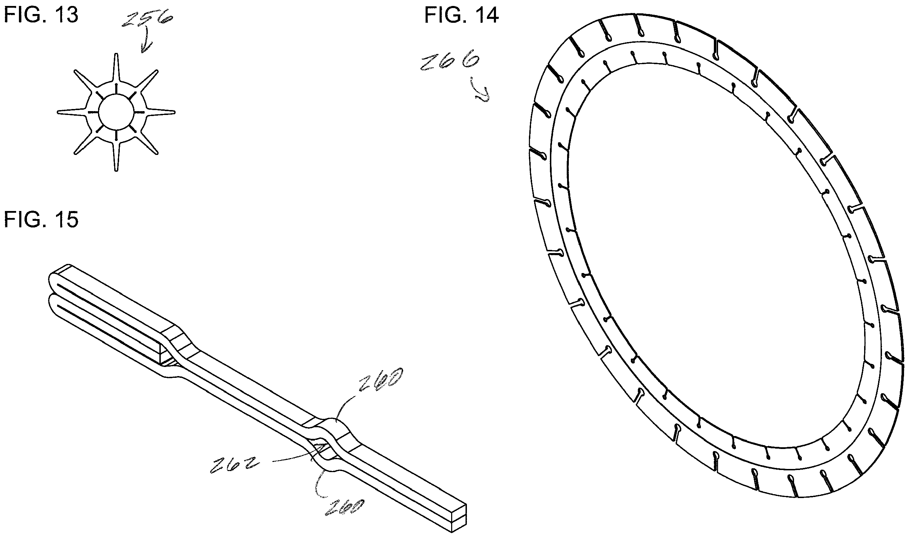

For purposes of reference, the flange surface 210 is an embossed surface, pressed or pushed outwardly from the plane of the sheet by an embossing tool, described more fully below. The flange surface 210 can be considered a raised surface, and along with the complementary surface on the second laminar element or disk 200, forms a circular cavity between them. A compression plate (described more fully below with respect to FIG. 13) is placed between the two spaced apart flange surfaces along with adhesive during assembly of the laminar structure.

As used herein, "bossment" will refer to collectively embossment and debossment surfaces relative to a reference plane or reference surface. In the context of a final laminar assembly forming a circular cutting core, "embossment" will be used to refer to surface structures in an embossed unit that are closer to the outside envelope of the structure than to the center plane of the structure. "Debossment" will be used to refer to surface structures in an embossed unit that are closer to the center plane of the structure. While it is understood that both the "embossed" structures and the "debossed" structures or surfaces are often (though need not be) formed in a single embossment process, these terms are used to differentiate the two types of surfaces. It is also understood that an embossment process can be used to form either type of surface, while these terms are used herein to differentiate their spatial relationships with reference to a center plane of the laminated structure, rather than to the process used to form them.

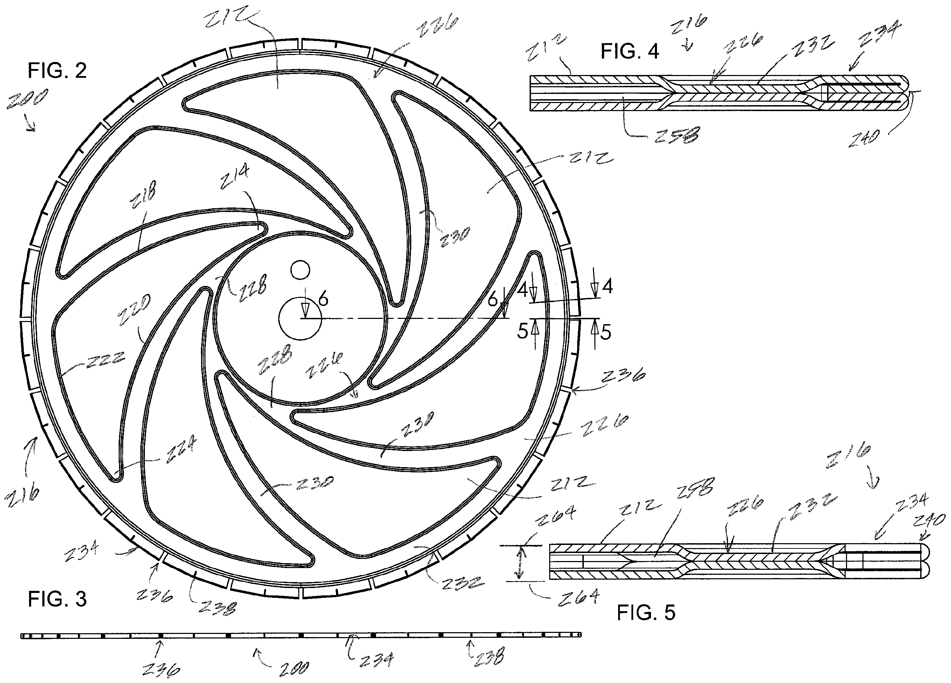

The first laminar element 200 also includes a plurality of embossed surfaces 212 formed into the material of the disc. While the embossed surfaces 212 can take a number of configurations and geometries, the surfaces 212 shown in FIGS. 1-2 have a deltoid configuration in plan view (as viewed in FIG. 2). In the present example, there is an odd number of embossed surfaces 212, substantially evenly distributed about the circular surface of the first laminar element 200. Each of the embossed surfaces 212 are substantially identical to the others, though each can be different from the other or can be arranged in sets, where the geometries in a given set are identical, but the geometry of sets are different from each other.

Considering a single deltoid geometry of an embossed surface 212 (FIG. 2), each surface 212 begins at an interior point 214 radially outward from the flange surface 210. In the present configuration of the laminar core structure for a circular cutting blade, the interior point 214 is the leading portion of the surface 212 during rotation. The surface 212 extends radially outward and diverges or expands arcuately in a counterclockwise direction toward the perimeter portion 216 of the laminar element 200. In this configuration, the leading portion of the deltoid surface 212 can be considered to extend approximately tangent to the perimeter of the flange surface 210.

Each deltoid surface 212 includes a leading-edge surface 218 and a trailing edge surface 220. The leading-edge surface 218 extends radially and arcuately toward the perimeter portion at a first radius of curvature, and the trailing edge surface 220 extend radially and arcuately toward the perimeter at a second radius of curvature. The leading and trailing edge surfaces are joined by a perimeter edge surface 222. The perimeter edge surface extends arcuately and has a radius of curvature centered on the center of the circular laminar element. The trailing and perimeter edge surfaces join at a trailing point 224.

The first laminar element 200 has debossed surfaces 226, which are principally surfaces that remain in their original positions during and after the embossment process that produced the embossed surfaces 212. In the present configuration of the embossment, the debossed surfaces 226 include flange perimeter surfaces 228, arcuate surfaces 230 extending between adjacent deltoid surfaces 212, and a perimeter surface 232. With the embossment produced in the first laminar element, the flange perimeter surface 228 substantially encircles the flange surface 210 and separates the flange surface from the adjacent deltoid surfaces 212. The arcuate surfaces 230 separate adjacent deltoid surfaces, and the perimeter surface 232 extends continuously around the perimeter portion 216 of the first laminar element 200. The perimeter surface 232 separate a respective deltoid surface 212 from segment-mounting tabs 234. The tabs 234 are spaced radially outward from, and form part of the perimeter portion with, the debossed perimeter surface 232.

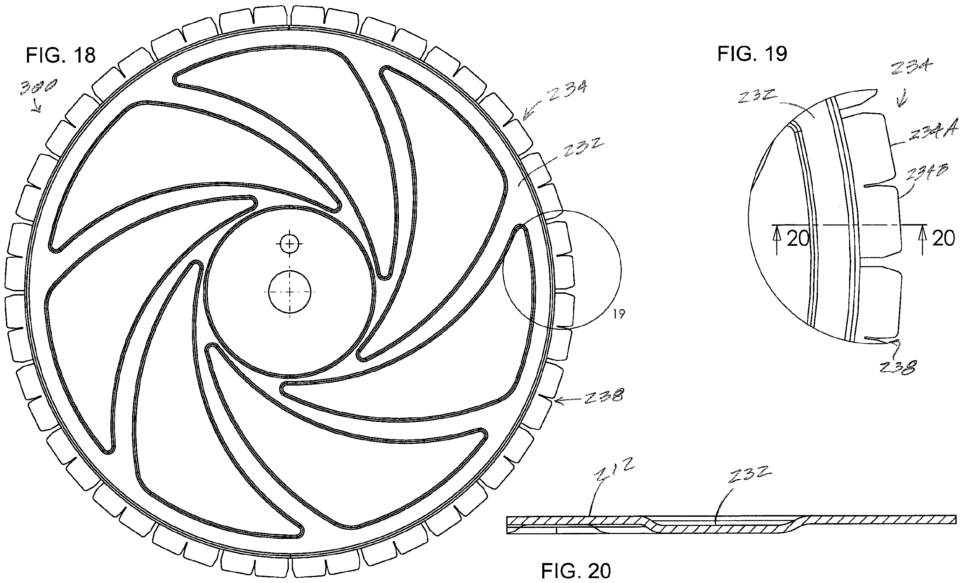

In addition to the deltoid embossed surfaces 212, the tabs 234 are also embossed surfaces in the configurations shown in FIGS. 1-5. As described more fully below with respect to FIGS. 18-20, the tabs 234 are formed as embossed surfaces after being cut to form the desired perimeter configuration in the blank disc. Each tab 234 is separated from adjacent tabs by a radially extending gap or space 236 (FIG. 2). In the present configuration, each tab is formed into a pair of sub tabs 234A and 234B (FIG. 19) by a respective cut 238 bisecting a substantial portion of each tab. Each sub tab includes angled end surfaces so that each sub tab does not terminate in square corners.

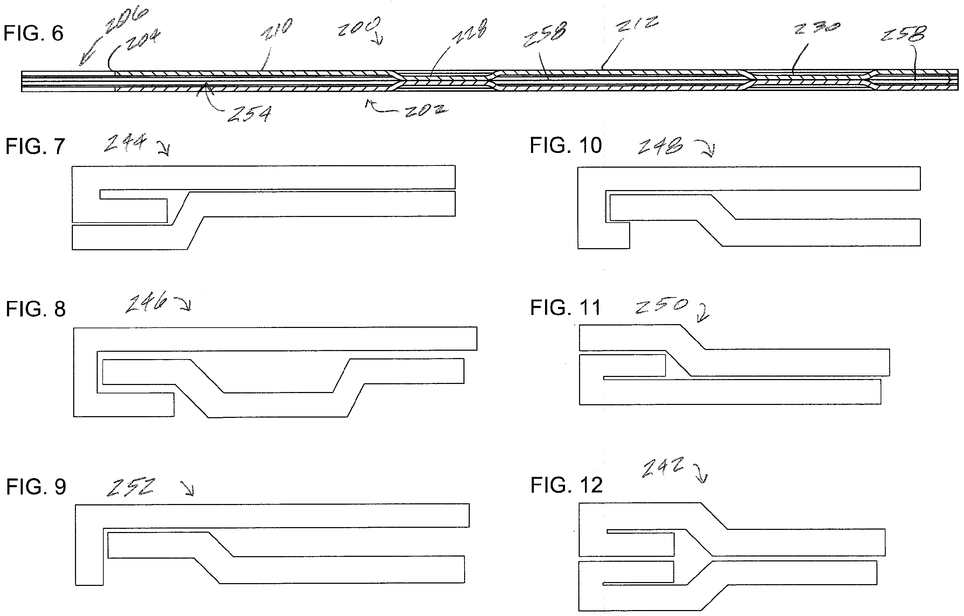

Each sub tab is bent, formed or otherwise shaped to form a hem. In the configuration shown in FIGS. 4 and 5, the embossed sub tabs are bent inward to extend substantially in the same plane as the debossed surfaces 226, 228, 230 and 232. The bent tabs or hem configuration, in the present example, make easier the creation of a lap joint with the mirror image structure of the second laminar element, as shown in FIGS. 4 and 5. In the present examples, the hem configuration extends completely around the entire circumference of the perimeter portion of the first laminar element. However, other configurations are possible for the tabs. A hem configuration and the lap joint provide additional strength, segment mounting surface area, and a structural symmetry for the tabs about a plane through the center of the lamination. The perimeter configuration of the lamination is also represented in the schematic 242 of FIG. 12. Hem configurations are also represented in 244, 246, 248 and 250, respectively, in FIGS. 7-8 and 10-11, schematic representations of core perimeter configurations. A further alternative perimeter configuration is shown at 252 in FIG. 9. While spaces are shown between adjacent surfaces in the schematics of FIGS. 7-12, such spaces or gaps are shown for more clearly illustrating possible perimeter configurations, but more contact between adjacent surfaces of structures in the lamination provides structural integrity to the assembly. As with the other illustrations, an adhesive layer is omitted for ease of illustration and clarity.

In the present examples, the hem is considered to be a portion of a perimeter edge of the laminar element that has been turned and folded back on itself. The term "hem" includes turning and folding back to either side of the laminar element, because whether or not the edge is "turned under" is not determined until the laminar element is placed adjacent another surface, such as a second laminar element. It is desirable to have both laminar elements with respective hems turned under to the configuration shown in FIGS. 4-5 and 12, but it is possible to have the folds turned outward and back on the adjacent surfaces of their respective laminar elements so that the "hems" are back to back. In this example, the adjacent surfaces might or might not be embossed, as desired.

In the present configuration of the blade core shown in FIGS. 1-6, the first and second laminar elements are joined so that the debossed surfaces 228, 230 and 232 are in contact with each other through respective adhesive portions (not shown). Because the first and second laminar elements in the present example are mirror images of each other, the surface areas of contact between the adjacent debossed surfaces are substantially complete. Additionally, the hem structures of the respective laminar elements are in close contact. While adhesive can be used between the hem structures, adhesive may also be omitted in favor of securing the surfaces otherwise, for example by laser welding, brazing or by other means.

As an alternative to a hem at the outer perimeter edge, the sub tabs 234A and 234B can be omitted (for example not form, or removed prior to assembly) and the assembly of adjacent first and second laminar elements with embossed outer perimeters forms a perimeter cavity. The perimeter cavity can receive a ring, annulus or similar structure, or segments. Cutting segments can then be mounted or secured in the same manner as discussed herein with respect to hem structures. Similar substitutions can be applied to the configurations shown in FIGS. 7-11 to be positioned in an interior of an envelope at or near the perimeter, and cutting segments or other working components can then be applied.

This configuration of the blade core shown in FIGS. 1-6 produces cavities between the embossed flange surface 210 and deltoid surfaces 212 and their respective complementary structures on the facing laminar element. The flange surfaces 210 form a cavity 254 (FIG. 6) into which a compression plate 256 (FIG. 13) may be placed and secured with adhesive, for example adhesive on both surfaces of the compression plate.

The embossed surfaces 212 form respective cavities 258 (FIGS. 4-6) between the first and second laminar elements. In the illustrated configuration, the cavities 258 are closed. However, in other configurations, one or more inlet openings and one or more outlet openings may be provided. For example, inlet openings may be provided at the interior point 214 (FIG. 2) and outlet openings through the side surfaces of the embossed surfaces 212, through the perimeter surface 222, and/or through the leading or trailing side surfaces 218 and 220, respectively. Alternatively, or additionally, openings may be provided through the bondline between adjacent laminar elements to exit out the perimeter of the cavities 258, for example to the gullets 236. Such openings may be provided by embossment, laser cutting, drilling or otherwise. An example of an opening produced by embossment is illustrated schematically in FIG. 15, wherein embossments 260 defined a cavity 262, which may form a channel, for example a flow channel between the laminar elements. In one example, the cavity 262 can be part of a channel extending along the bondline between the facing laminar elements, for example to the perimeter portion or to a side outlet. In another example, the cavity 262 can connect adjacent cavities.

It is noted that the embossed surfaces 212 are combined through the first and second laminar elements to form embossed surfaces. In another configuration, the deltoid surfaces are formed as debossed surfaces and the adjacent surfaces 226, 228, and 230 are configured as embossed surfaces in the final lamination assembly, along with the flange surfaces 210. In this configuration, the deltoid surfaces contact each other through adhesive layers, and the embossed surfaces 226, 228, and 230 combined to form respective cavities. The deltoid surfaces represent large surface areas, and their securement together with adhesive provides a strong structure. Additionally, their configuration as debossed structures placed them along the centerline and further away from cut side surfaces. Additionally, where a core "envelope" is defined by planes passing through and parallel to outer-most surfaces of the core, represented schematically at 264 (FIG. 5), the deltoid surfaces in this configuration formed by debossed structures are further away from the outer envelope than are the embossed surfaces. In the area of the outer perimeter 216, embossed portions can be formed radially inward of the outer perimeter 216, leaving a perimeter debossed structures such as 232 to support the double hem 240. In this configuration, the first and second laminar elements remain as mirror images of each other, while a relatively large surface area of contact is provided with deltoid debossed surfaces adhered to each other along the central adhesive plane. It is noted that where the laminate assembly has cutting segments mounted to the perimeter, and where such segments have a width greater than that represented by the core envelope 264, the envelope can be considered as being defined by the outer dimensions of the cutting segments. In such a situation, the debossed surfaces are still closer to the centerline than are the embossed surfaces.

The amount of embossment of surfaces can be selected as desired. In the configurations illustrated, the depth of embossment is approximately equal to the material thickness. However, the depth of embossment can be lesser or greater. Additionally, in the illustrated embodiment, the envelope of the blade core represented at 264 is uniformly constant across the entire blade core, to within between 2% and 5%. When variation is 5% or less, the thickness formed by the embossed surfaces is "substantially uniform" or "substantially constant". Consequently, the spacing between adjacent surfaces of the first and second laminar elements does not change significantly. With a substantially uniform thickness (spacing between the lines 264 in FIG. 5), there is a reduced likelihood that debossed surfaces will contact cut surfaces during cutting. Conversely, cutting segments and possibly embossed surfaces will contact the cut surface. Consequently, it may be desirable to increase the surface area of the debossed surfaces.

With larger diameter plates, it can be desirable to mount the cutting segments on a perimeter ring 266 (FIG. 14), or a plurality of ring segments. Such a perimeter ring would be inserted in a perimeter gap or groove (not shown) between facing perimeter surfaces on first and second laminar elements. The core perimeter can include hem configurations, or alternatively, hem configurations can be omitted. When using a perimeter ring, segment mounting tabs 234 can be omitted.

Laminar elements such as a laminar element 300 may be formed by embossment using embossment tools, such as a positive embossment tool 302 and an opposite or negative embossment tool 304. The laminar element 300 has a configuration substantially identical to the laminar element 200 but without tabs having been formed. The positive embossment tool includes raised surfaces 306 used to press into the metal blank to form the embossed surfaces in the laminar element 300. The negative embossment tool 304 includes cavities to complement the raised surfaces 306, leaving the remaining surface on the tool for the arcuate portions. The preparation for, the process of embossment and releasing of the product from the tools may follow conventional procedures.

Following embossment, the embossed laminar element 300 (FIG. 18) can be cut so as to form the tabs 234 (FIGS. 18-20). The tabs may then be bent in the direction desired to form the desired hem configuration, producing the final laminar element.

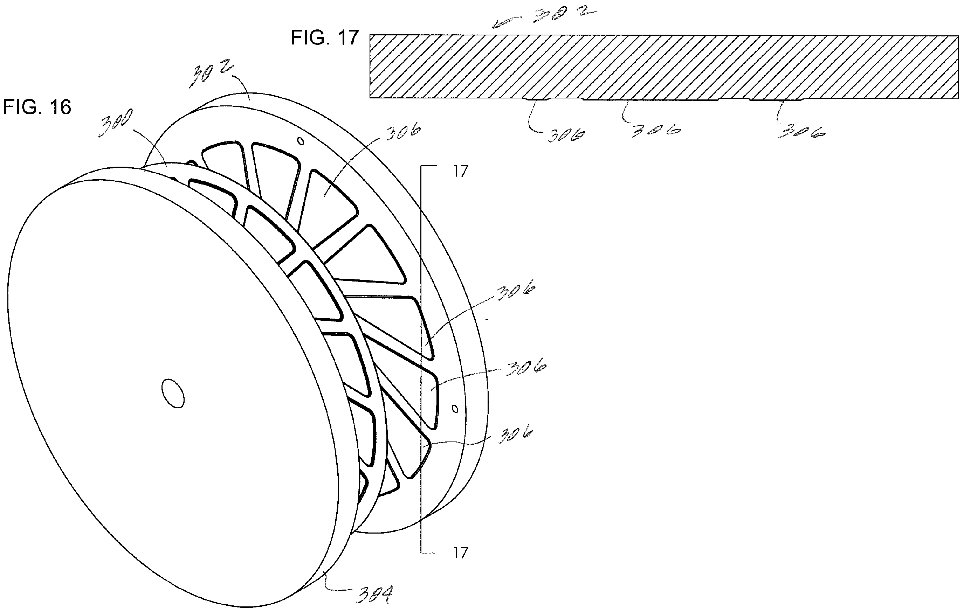

Embossment tools similar to those described with respect to FIG. 16-17 can also be used to create the second laminar elements, with appropriate changes to produce the mirror image. Other configurations of laminar elements can be formed by suitable embossment tools.

Having thus described several exemplary implementations, it will be apparent that various alterations and modifications can be made without departing from the scope of the inventions as defined by the claims. Accordingly, the foregoing description is intended to be illustrative only.

## Claims

1. A circular laminated saw blade core (100) comprising first and second disc portions with adhesive between the first and second disc portions (200, 202), **characterized by** at least the first disc portion having adjacent embossed surfaces (212) separated in circumferential direction by a debossed surface (230) wherein the embossed surfaces (212) have a substantially constant depth relative to a reference plane intersecting a point on and extending parallel to a surface of the first disc portion and form part of a closed cavity.

2. A circular laminated saw blade core (100) comprising first and second disc portions with adhesive between the first and second disc portions (200, 202), **characterized by** at least the first disc portion having adjacent debossed surfaces (212) separated in circumferential direction by an embossed surface (230) wherein the debossed surfaces (212) have a substantially constant thickness relative to a reference plane intersecting a point on and extending parallel to a surface of the first disc portion and the embossed surface (230) form part of a closed cavity.

3. The blade core of claim 1 or 2 wherein the first and second disc portions (200, 202) and the adhesive form a core for a concrete cutting blade and further including cutting segments fixed to a perimeter of the cutting blade.

4. The blade core of claim 1 or 2 further including a center opening (206) for a drive element within a flange area (210) of the first and second disc portions (200, 202), and further including a compression plate (256) within the flange area of the first and second disc portions (200, 202).

5. The blade core of claim 1 or 2 further including a groove in a perimeter of the blade and a ring (266) extending arcuately in the groove.

6. The blade core of claim 1 or 2 wherein at least the first disc portion (200) has a perimeter and wherein a portion of the perimeter includes a hem (242, 244, 246, 248, 250).

7. The blade core of claim 6 wherein the embossed surfaces (212, 230) create an embossment and the hem extend from a plane of the first disc portion (200) in the same direction.

8. The blade core of claim 6 wherein the debossed surfaces (230, 212) create an embossment and the hem extend from a plane of the first disc portion (200) in different directions.

9. The blade core of claim 6 wherein the embossed or debossed surfaces (212) have a deltoid geometry.

10. A method of forming a laminated blade core according to claim 1 or 2, the method comprising positioning a first disc portion (200) having the embossed surfaces (212) in a known position, positioning a second disc portion (202) adjacent the first disc portion (200) with adhesive between and applying the second disc portion (202) to the first disc portion (200).

11. The method of claim 10 wherein applying the second disc portion (202) includes applying the second disc portion (202) having embossed surfaces (212, 230) and debossed surfaces (230, 212).

12. The method of claim 11 wherein applying the second disc portion (202) includes applying the second disc portion (202) so that the embossed surfaces (212, 230) and debossed surfaces (230, 212) of the second disc portion (202) and the embossed surfaces (212, 230) and debossed surfaces (230, 212) of the first disc portion (200) are mirror images.

13. The method of any of claims 10-12 further including applying the second disc portion (202) to the first disc portion (200) with adhesive between wherein the first and second disc portions (200, 202) include respective hems (242, 244, 246, 248, 250) and the respective hems are placed adjacent each other to form an internal hem.

14. The method of any of claims 10-12 further including placing at least a portion of a ring at a perimeter of one of the first and second disc portions (200, 202).

15. The method of any of the claims 10-14 further including applying the second disc portion (202) to the first disc portion (200) with adhesive between and a ring between the first and second disc portions (200, 202) in an interior portion of the first and second disc portions (200, 202).

## Patentansprüche

1. Ein kreisförmiger laminierter Sägeblattkern (100), welcher einen ersten und einen zweiten Scheibenabschnitt aufweist mit einem Klebstoff zwischen dem ersten und dem zweiten Scheibenabschnitt (200, 202),
**dadurch gekennzeichnet, dass** zumindest der erste Scheibenabschnitt zueinander benachbart angeordnete, hochgeprägte Flächen (212) hat, die in Umfangsrichtung durch eine tiefgeprägte Fläche (230) getrennt sind, wobei die hochgeprägten Flächen (212) eine im Wesentlichen konstante Tiefe haben in Bezug auf eine Referenzebene, welche einen Punkt auf einer Fläche des ersten Scheibenabschnitts schneidet und sich parallel zu dieser erstreckt, und einen Teil eines geschlossenen Hohlraums bilden.

2. Ein kreisförmiger laminierter Sägeblattkern (100), welcher einen ersten und einen zweiten Scheibenabschnitt aufweist mit einem Klebstoff zwischen dem ersten und dem zweiten Scheibenabschnitt (200, 202),
**dadurch gekennzeichnet, dass** zumindest der erste Scheibenabschnitt zueinander benachbart angeordnete, tiefgeprägte Flächen (212) hat, die in Umfangsrichtung durch eine hochgeprägte Fläche (230) getrennt sind, wobei die tiefgeprägten Flächen (212) eine im Wesentlichen konstante Dicke haben in Bezug auf eine Referenzebene, welche einen Punkt auf einer Fläche des ersten Scheibenabschnitts schneidet und sich parallel zu dieser erstreckt, und die hochgeprägte Fläche (230) einen Teil eines geschlossenen Hohlraums bildet.

3. Der Blattkern gemäß Anspruch 1 oder 2, wobei der erste und der zweite Scheibenabschnitt (200, 202) und der Klebstoff einen Kern für ein Beton-Schneidblatt bilden, und ferner aufweisend Schneidsegmente, welche an einem Umfangsrand des Schneidblattes befestigt sind.

4. Der Blattkern gemäß Anspruch 1 oder 2, ferner aufweisend eine zentrale Öffnung (206) für ein Antriebselement innerhalb eines Flanschbereichs (210) des ersten und des zweiten Scheibenabschnitts (200, 202), und ferner aufweisend eine Kompressionsplatte (256) innerhalb des Flanschbereichs des ersten und des zweiten Scheibenabschnitts (200, 202).

5. Der Blattkern gemäß Anspruch 1 oder 2, ferner aufweisend eine Nut in einem Umfangsrand des Blatts, und einen Ring (266), welcher sich bogenförmig in der Nut erstreckt.

6. Der Blattkern gemäß Anspruch 1 oder 2, wobei zumindest der erste Scheibenabschnitt (200) einen Umfang hat und wobei ein Abschnitt des Umfangs eine Einsäumung (242, 244, 246, 248, 250) aufweist.

7. Der Blattkern gemäß Anspruch 6, wobei die hochgeprägten Flächen (212, 230) eine Hochprägung erzeugen und die Einsäumung sich von einer Ebene des ersten Scheibenabschnitts (200) aus in dieselbe Richtung erstreckt.

8. Der Blattkern gemäß Anspruch 6, wobei die tiefgeprägten Flächen (230, 212) eine Hochprägung erzeugen und die Einsäumung sich von einer Ebene des ersten Scheibenabschnitts (200) aus in verschiedene Richtungen erstreckt.

9. Der Blattkern gemäß Anspruch 6, wobei die hochgeprägten oder tiefgeprägten Flächen (212) eine deltaförmige Geometrie haben.

10. Ein Verfahren zum Bilden eines laminierten Blattkerns gemäß Anspruch 1 oder 2, wobei das Verfahren aufweist ein Positionieren eines ersten Scheibenabschnitts (200), welcher die hochgeprägten Flächen (212) hat, in einer bekannten Position, ein Positionieren eines zweiten Scheibenabschnitts (202) benachbart zu dem ersten Scheibenabschnitt (200) mit einem Klebstoff dazwischen, und ein Aufbringen des zweiten Scheibenabschnitts (202) auf den ersten Scheibenabschnitt (230, 212).

11. Das Verfahren gemäß Anspruch 10, wobei das Aufbringen des zweiten Scheibenabschnitts (202) aufweist ein Aufbringen des zweiten Scheibenabschnitts (202), welcher hochgeprägte Flächen (212, 230) und tiefgeprägte Flächen (230, 212) hat.

12. Das Verfahren gemäß Anspruch 11, wobei das Aufbringen des zweiten Scheibenabschnitts (202) aufweist ein Aufbringen des zweiten Scheibenabschnitts (202), sodass die hochgeprägten Flächen (212, 230) und tiefgeprägten Flächen (230, 212) des zweiten Scheibenabschnitts (202) und die hochgeprägten Flächen (212, 230) und die tiefgeprägten Flächen (230, 212) des ersten Scheibenabschnitts (200) spiegelbildlich sind.

13. Das Verfahren gemäß irgendeinem der Ansprüche 10 bis 12, ferner aufweisend ein Aufbringen des zweiten Scheibenabschnitts (202) auf den ersten Scheibenabschnitt (200) mit Klebstoff dazwischen, wobei der erste und der zweite Scheibenabschnitt (200, 202) jeweils eine Einsäumung (242, 244, 246, 248, 250) aufweisen und die jeweiligen Einsäumungen benachbart zueinander angeordnet werden, um eine innere Einsäumung zu bilden.

14. Das Verfahren gemäß irgendeinem der Ansprüche 10 bis 12, ferner aufweisend ein Platzieren zumindest eines Abschnitts eines Rings an einem Umfang von einem von dem ersten und dem zweiten Scheibenabschnitt (200, 202).

15. Das Verfahren gemäß irgendeinem der Ansprüche 10 bis 14, ferner aufweisend ein Aufbringen des zweiten Scheibenabschnitts (202) auf dem ersten Scheibenabschnitt (200) mit Klebstoff dazwischen und einem Ring zwischen dem ersten und dem zweiten Scheibenabschnitt (200, 202) in einem Innenabschnitt des ersten und des zweiten Scheibenabschnitts (200, 202).

## Revendications

1. Noyau de lame de scie laminé et circulaire (100) comprenant une première et une seconde parties de disque avec un adhésif entre la première et la seconde parties de disque (200, 202),
**caractérisé en ce qu'**au moins la première partie de disque possède des surfaces bosselées adjacentes (212) séparées dans la direction circonférentielle par une surface creusée (230), dans lequel les surfaces bosselées (212) possèdent une profondeur sensiblement constante par rapport à un plan de référence croisant un point situé sur et s'étendant parallèlement à une surface de la première partie de disque, et font partie d'une cavité fermée.

2. Noyau de lame de scie laminé et circulaire (100) comprenant une première et une seconde parties de disque avec un adhésif entre la première et la seconde partie de disque (200, 202),
**caractérisé en ce qu'**au moins la première partie de disque possède des surfaces creusées adjacentes (212) séparées dans la direction circonférentielle par une surface bosselée (230), dans lequel les surfaces creusées (212) possèdent une épaisseur sensiblement constante par rapport à un plan de référence croisant un point situé sur et s'étendant parallèlement à une surface de la première partie de disque, et la surface bosselée (230) fait partie d'une cavité fermée.

3. Noyau de lame selon la revendication 1 ou 2, dans lequel les première et seconde parties de disque (200, 202) et l'adhésif forment un noyau pour une lame de découpe du béton, et comprenant en outre des segments de coupe fixés sur un périmètre de la lame de découpe.

4. Noyau de lame selon la revendication 1 ou 2, comprenant en outre une ouverture centrale (206) destinée à un élément d'entraînement à l'intérieur d'une zone de rebord (210) des première et seconde parties de disque (200, 202), et comprenant en outre une plaque de compression (256) à l'intérieur de la zone de rebord des première et seconde parties de disque (200, 202).

5. Noyau de lame selon la revendication 1 ou 2, comprenant en outre une rainure dans un périmètre de la lame et un anneau (266) s'étendant de manière arquée dans la rainure.

6. Noyau de lame selon la revendication 1 ou 2, dans lequel au moins la première partie de disque (200) possède un périmètre, et dans lequel une partie du périmètre comprend un bord rabattu (242, 244, 246, 248, 250).

7. Noyau de lame selon la revendication 6, dans lequel les surfaces bosselées (212, 230) créent un bossage et le bord rabattu s'étend depuis un plan de la première partie de disque (200) dans la même direction.

8. Noyau de lame selon la revendication 6, dans lequel les surfaces creusées (230, 212) créent un bossage et le bord rabattu s'étend depuis un plan de la première partie de disque (200) dans différentes directions.

9. Noyau de lame selon la revendication 6, dans lequel les surfaces bosselées ou creusées (212) possèdent une géométrie deltoïdienne.

10. Procédé de formation d'un noyau de lame laminé selon la revendication 1 ou 2, le procédé comprenant le positionnement d'une première partie de disque (200) ayant les surfaces bosselées (212) dans une position connue, le positionnement d'une seconde partie de disque (202) adjacente à la première partie de disque (200) avec un adhésif entre celles-ci, et l'application de la seconde partie de disque (202) sur la première partie de disque (200).

11. Procédé selon la revendication 10, dans lequel l'application de la seconde partie de disque (202) comprend l'application de la seconde partie de disque (202) ayant des surfaces bosselées (212, 230) et des surfaces creusées (230, 212).

12. Procédé selon la revendication 11, dans lequel l'application de la seconde partie de disque (202) comprend l'application de la seconde partie de disque (202) de sorte que les surfaces bosselées (212, 230) et les surfaces creusées (230, 212) de la seconde partie de disque (202) et les surfaces bosselées (212, 230) et les surfaces creusées (230, 212) de la première partie de disque (200) soient symétriques.

13. Procédé selon l'une quelconque des revendications 10 à 12, comprenant en outre l'application de la seconde partie de disque (202) sur la première partie de disque (200) avec un adhésif entre celles-ci, dans lequel la première et la seconde parties de disque (200, 202) comprennent des bords rabattus respectifs (242, 244, 246, 248, 250) et les bords rabattus respectifs sont placés de manière adjacente les uns aux autres pour former un bord rabattu interne.

14. Procédé selon l'une quelconque des revendications 10 à 12, comprenant en outre le placement d'au moins une partie d'un anneau au niveau d'un périmètre de l'une de la première et de la seconde parties de disque (200, 202).

15. Procédé selon l'une quelconque revendication 10 à 14, comprenant en outre l'application de la seconde partie de disque (202) sur la première partie de disque (200) avec un adhésif entre celles-ci, et d'un anneau entre la première et la seconde parties de disque (200, 202) dans une partie intérieure de la première et de la seconde parties de disque (200, 202).
